(19) Europäisches Patentamt
European Patent Office
Office européen des brevets

(11) Veröffentlichungsnummer: **0 397 190 B1**

# (12) EUROPÄISCHE PATENTSCHRIFT

(45) Veröffentlichungstag der Patentschrift: **07.12.94**

(51) Int. Cl.[5]: **C09B 69/04**, C08K 5/42, //C09B29/36

(21) Anmeldenummer: **90108902.9**

(22) Anmeldetag: **11.05.90**

Die Akte enthält technische Angaben, die nach dem Eingang der Anmeldung eingereicht wurden und die nicht in dieser Patentschrift enthalten sind.

## (54) Azopigmente, ihre Herstellung und ihre Verwendung.

(30) Priorität: **11.05.89 CS 2853/89**

(43) Veröffentlichungstag der Anmeldung:
**14.11.90 Patentblatt 90/46**

(45) Bekanntmachung des Hinweises auf die Patenterteilung:
**07.12.94 Patentblatt 94/49**

(84) Benannte Vertragsstaaten:
**CH DE GB LI**

(56) Entgegenhaltungen:
**EP-A- 0 241 413**
**CH-A- 524 012**

**CHEMICAL ABSTRACTS, Band 84, Nr. 10, 8. März 1976, Seite 80, Zusammenfassung Nr. 61058f, Columbus, Ohio, US; & JP-A-50 022 157 (K. KATAOKA et al.) 29-07-1975**

(73) Patentinhaber: **SYNTHESIA akciová spolecnost**

**Pardubice - Semtin (CZ)**

(72) Erfinder: **Chlost, Milan**
**Na drázce 347**
**Pardubice (CS)**
Erfinder: **Lustig, Jîrî**
**Ohrazenická 173**
**Pardubice (CS)**

(74) Vertreter: **Patentanwälte Beetz - Timpe - Siegfried Schmitt-Fumian - Mayr**
**Steinsdorfstrasse 10**
**D-80538 München (DE)**

EP 0 397 190 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft insbesondere zum Färben von Kunststoffen und Lacken geeignete Azopigmente, ihre Herstellung und ihre Verwendung.

Bisher bekannte und verwendete Azopigmente haben die Formel

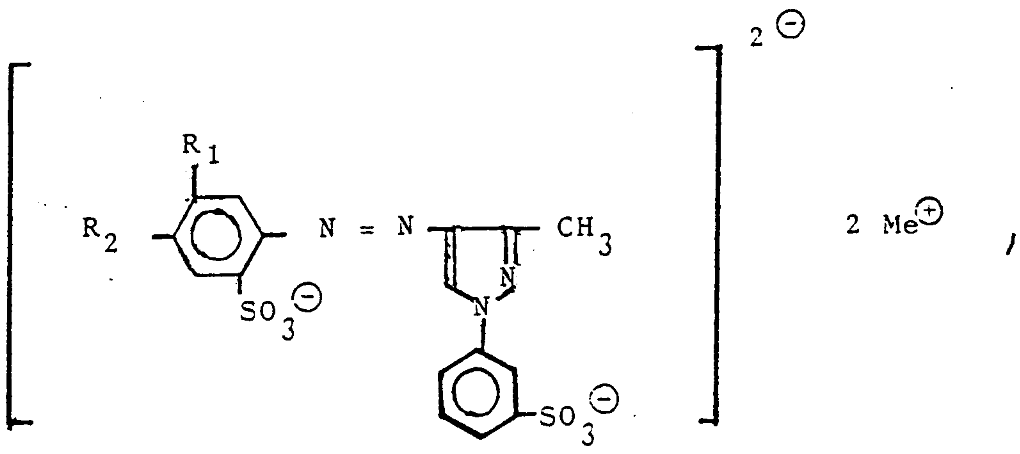

worin $R_1$ und $R_2$ gleich oder verschieden sind und H, Cl, $CH_3$ oder eine Acetylaminogruppe bedeuten und Me für Wasserstoff, Natrium oder Calcium oder deren Gemische steht.

Diese Farbstoffe werden beispielsweise durch Kupplung von diazotierter 3,4-Dichloranilin-6-sulfonsäure mit dem entsprechenden Pyrazolon und Überführen in ein entsprechendes Metallsalz, beispielsweise das Natrium-, Dinatrium- oder Calciumsalz oder ein Calcium-Natrium-Mischsalz hergestellt.

Es sind ferner auch ähnliche Farbstoffe mit etwas anderen Substituenten bekannt, beispielsweise mit einer Acetylaminogruppe in der aktiven Kupplungskomponente oder mit 2,5-Dichlor-4-sulfonsäure in der passiven Komponente oder mit einer Kombination einer Methylgruppe mit Chlor in der aktiven Komponente.

Aus EP-A-0 241 413 sind Aminsalze von Azoverbindungen des oben angegebenen Typs bekannt, deren Nation, neben anderen Bedeutungen, ein primäres, sekundäres, tertiäres oder quaternäres Ammoniumion mit $C_1$-$C_4$-Alkylgruppen sein kann.

Alle diese Farbstoffe stellen gelbe, zum Färben von Kunststoffen und Anstrichmitteln geeignete Pigmente dar. Ein Nachteil dieser Farbstoffe ist jedoch ihre beträchtliche Wasserlöslichkeit, die größenordnungsmäßig bis etwa einige Zehn Gramm pro Liter beträgt. Eine absolute Wasserunlöslichkeit der zum Färben von Kunststoffen und Anstrichmitteln verwendeten Pigmente ist zwar nicht unbedingt erforderlich; jedoch setzt eine hohe Wasserlöslichkeit die Wasser-, Schweiß-, Wasch- und Wetterbeständigkeit herab, verschlechtert die Ausbeute des Farbstoffs bei der Erzeugung und belastet die Abwasserwirtschaft durch die hohe Färbungswirkung.

Die Löslichkeit eines Farbstoffs in Wasser und in anderen polaren Lösungsmitteln ist von seiner Dissoziation und Polarität abhängig. Eine hohe Polarität macht sich ungünstig bemerkbar, teils durch eine hohe Agglomeration der Farbstoffe während des Trocknens und Mahlens (da die entgegengesetzt geladenen Molekülteile einander anziehen), teils insbesondere durch schwierige Dispergierung in unpolaren Medien wie Anstrichmitteln und insbesondere in Polyethylen und Polypropylen, weshalb die Farbstoffe nur schwierig benetzbar und dispergierbar sind. Dies führt wiederum zu schwieriger Verarbeitung so gefärbter Materialien und einer Verschlechterung der Ergiebigkeit und der Fließeigenschaften. So steigt beispielsweise beim Extrudieren von mit derartigen Farbstoffen gefärbten Polypropylenfasern der zum Durchpressen der Fasern durch die Düsen notwendige Druck rasch an, die Düsen verstopfen sich, und die Fasern reißen. Diese ungünstige Eigenschaft läßt sich nur in beschränktem Maße durch eine spezielle mechanische Schlußbehandlung des Pigments vermindern, beispielsweise durch Mahlen, Sortieren der Teilchen u.ähnl.

Die Wasserlöslichkeit solcher Pigmente läßt sich zwar in gewissen Grenzen durch die Wahl geeigneter Substituenten im Molekül beeinflussen, jedoch werden die Lipophilie und die Benetzbarkeit in Kunststoffen hierdurch nicht wesentlich erhöht.

Der Erfindung liegt die Aufgabe zugrunde, unter Vermeidung der genannten Nachteile des Standes der Technik Azopigmente und ihre Herstellung anzugeben, die sich durch geringere Löslichkeit, erhöhte Benetzbarkeit in nichtpolaren Medien und geringere Agglomerationstendenz auszeichnen, wobei der hydrophil-lipophile Charakter einstellbar sein soll, ferner die Verwendung dieser Azopigmente.

Die Aufgabe wird anspruchsgemäß gelöst. Die abhängigen Ansprüche betreffen vorteilhafte Ausführungsformen der Erfindungskonzeption.

Die erfindungsgemäßen Azopigmente, die gewissermaßen Lack-Azopigmente darstellen, besitzen die allgemeine Formel I,

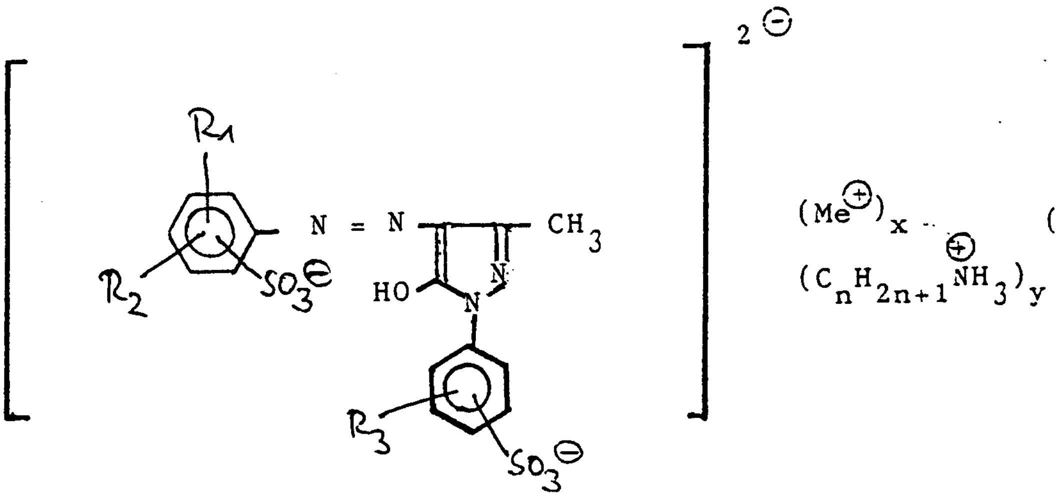

(I),

in der bedeuten:

| | |
|---|---|
| $R_1$, $R_2$ und $R_3$ | zugleich oder unabhängig Wasserstoff, Methyl, Chlor oder Acetylamino, |
| $Me^{\oplus}$ | Wasserstoff ($H^+$), Natrium ($Na^+$), Calcium ($Ca^{2+}/2$), Ammonium ($NH_4^+$) oder Gemische dieser Ionen, |
| n | 12, 14 und/oder 18, |
| x | eine Zahl von 0 bis 1,98 |
| | und |
| y | eine Zahl von 0,02 bis 2,0, |

wobei x + y = 2 ist.

Erfindungsgemäße Azopigmente mit sehr günstigen Eigenschaften besitzen die Formel Ia,

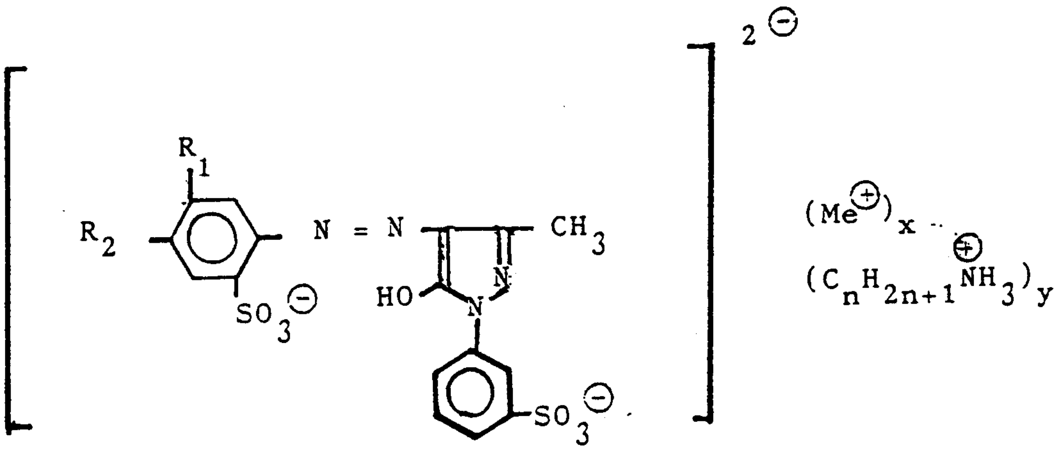

(Ia),

in der $R_1$, $R_2$, m, x und y die obige Bedeutung besitzen.

Das erfindungsgemäße Verfahren zur Herstellung der Azopigmente der Formeln I und Ia ist gekennzeichnet durch folgende Schritte:

(A) Diazotierung einer Anilinsulfonsäure der Formel II

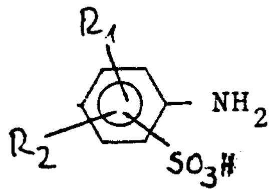

(II)

mit $R_1$ und $R_2$ wie oben
zum entsprechenden Diazoniumsalz der Formel IIa,

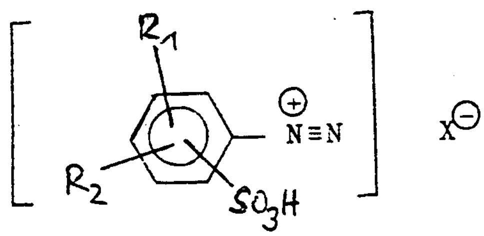

(IIa),

wobei $X^-$ ein Anion, insbesondere $Cl^-$, bedeutet,
(B) Kupplung des Diazoniumsalzes der Formel IIa mit einem 3-Methyl-1-sulfophenylpyrazolon der Formel III

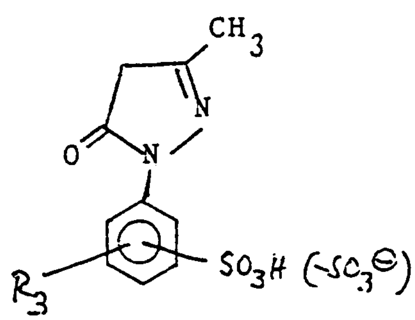

(III)

mit $R_3$ wie oben,
gegebenenfalls mit Überführung des Kupplungsprodukts in die Form der freien Säure der Formel IV

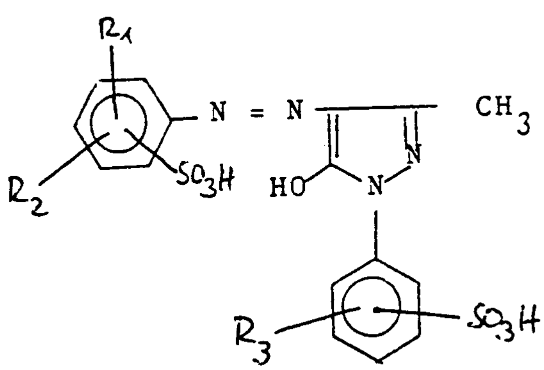

(IV),

mit $R_1$, $R_2$ und $R_3$ wie oben,
und

(C) Umsetzung des Kupplungsprodukts, gegebenenfalls in Form der freien Säure der Formel IV, oder eines Natrium-, Calcium- und/oder Ammoniumsalzes davon mit
einem oder mehreren Aminen der Formel V

$C_nH_{2n+1}NH_2$ (V)

mit n wie oben
und gegebenenfalls einem Natrium-, Calcium- und/oder Ammoniumsalz bzw. einem entsprechenden Hydroxid.

Die Mengen des bzw. der Amine der Formel V und gegebenenfalls der Metallsalze bzw. -hydroxide werden dabei vorteilhaft so gewählt, daß die angestrebten Werte für y bzw. x im Endprodukt vorliegen.

Nach einer vorteilhaften Ausführungsform wird Schritt C zusammen mit der Kupplung von Schritt B vorgenommen.

Durch Verwendung eines geeigneten lipophilen Kations, d.h. in diesem Falle eines Alkylammoniumions mit einer langen aliphatischen Kette, wird nicht nur die Löslichkeit bis auf Milligramm pro Liter herabgesetzt, sondern insbesondere die Benetzbarkeit des Azopigments in nichtpolaren Substraten erhöht, was sich durch leichtere Dispergierbarkeit in Polypropylen und auch durch rasche Herabsetzung der Geschwindigkeit der Druckerhöhung bei der Herstellung von Polypropylenfasern bemerkbar macht.

Diese Eigenschaft der besseren "Filtrierbarkeit" bleibt auch bei einem nur teilweisen Ersatz der anorganischen Kationen durch Alkylammoniumkationen erhalten. Dies läßt sich so erklären, daß diese Gruppe mit ihrem polaren, positiv geladenen Ende an dem negativ geladenen Farbstoffanion gebunden wird, das hierdurch elektrisch neutralisiert und abgeschirmt wird. Aufgrund der langen Alkylketten wirken diese Gruppen sterisch als eine Art Spreizmittel, das die Agglomeration der Teilchen verhindert, und verbessern zugleich durch ihren lipophilen Charakter die Benetzbarkeit in Olefinen und anderen unpolaren Kunststoffen wie auch die Dispergierbarkeit darin. Durch das gegenseitige Verhältnis der Alkylammonium- und Metallkatlonen läßt sich in beträchtlichem Maße der hydrophil-lipophile Charakter der Azopigmente variieren und dadurch eine optimale Anpaßbarkeit an verschiedene Medien, wie Anstrichmittel, Polyvinylchlorid, Polystyrol, Polyester, Polyolefine u.dgl., erzielen.

Die folgenden Ausführungsbeispiele erläutern die Erfindung.

**Beispiel 1**

In einem Becherglas wurden 800 ml Wasser vorgelegt; darin wurden 48,75 g 3,4-Dichloranilin-6-sulfonsäure unter Zugabe von 8,5 g Natriumhydroxid gelöst. Nach Zusatz von 2 g Aktivkohle wurde filtriert; die klare Lösung wurde mit 85 ml einer Chlorwasserstoffsäurelösung einer Konzentration von 5 mol/l ausgefällt und durch Zusatz von 80 ml einer Natriumnitrit-Titrierlösung einer Konzentration von 2,5 mol/l diazotiert. Die Suspension des Diazoniumsalzes wurde zu einer Lösung von 50 g 3-Methyl-1-(3-sulfophenyl)-pyrazolon (im folgenden kurz als 3'-Sulfophenylmethylpyrazolon bezeichnet) angegeben, das in 800 ml Wasser unter Zugabe von 8,5 g Natriumhydroxid gelöst worden war. Während der Kupplung wurde der pH-Wert mit 25 ml einer 25-%igen wässerigen Ammoniaklösung auf 5 bis 6 gehalten. Nach Beendigung der Kupplung wurde die Azopigmentsuspension mit überschüssiger Chlorwasserstoffsäure bis zu einer stark sauren Reaktion angesäuert und 3 h lang bei 90 bis 95 °C gerührt; das Azopigment wurde dann abfiltriert und wiederholt in verdünnter Chlorwasserstoffsäure verrührt und wieder filtriert. Nach der letzten Filtration wurde es mit destilliertem Wasser gewaschen und getrocknet. Ausbeute 93 g trockenes Pigment (91 % d.Th.) in Form der freiei Säure (Kation = H).

Das trockene Azopigment wurde 1 min lang in einer Splittermühle noch einmal gemahlen. 25,35 g dieses Pigments (etwa 0,05 mol) wurden dann in 1000 ml Wasser mit einer Lösung von 26,9 g Octadecylamin (0,1 mol) in verdünnter Essigsäure vermischt. Die Suspension wurde in eine Destillationsapparatur gegeben; aus dem System wurde nach und nach die gesamte Essigsäure abdestilliert, bis das Destillat neutral reagierte. Das Niveau im Destillierkolben wurde während der Destillation durch Zusatz von destilliertem Wasser auf konstanter Höhe gehalten. Dann wurde das erhaltene Bis(octadecylammonium)-Salz des Pigments abfiltriert, mit destilliertem Wasser gewaschen und getrocknet. Ausbeute 38 g (98 % d.Th.). Das Pigment (vgl. Versuch Nr. 22 in der Tabelle) war schon nach dem Trocknen fein pulverig. Zum Vergleich wurde es 1 min lang in einer Splittermühle gemahlen. Das Pigment wurde anschließend in einem erwärmten Extruder in geschmolzenem Polypropylen dispergiert, worauf die Masse bei einer Temperatur von 240 bis 250 °C versponnen wurde. Die Verspinnung verlief auch noch nach 20 min ohne Schwierigkeiten. Die zum Extrudieren der Masse durch die Düsen erforderliche Druckerhöhung betrug 200 MPa, bezogen auf 1 kg des Pigments, während sie beim Pigment in Form der freien Säure (vgl. Versuch Nr. 16

der Tabelle) mehr als 2000 MPa/kg bzw. bei dem auf dieselbe Weise behandelten Pigment in Form des $Ca^{2+}$ -Salzes (Versuch Nr. 18 der Tabelle) etwa 800 MPa/kg betrug.

**Beispiel 2**

25,35 g des nach Beispiel 1 hergestellten, getrockneten Pigments in Form der freien Säure (0,05 mol) wurden zwecks Überführung in das Calciumsalz in 1000 ml Wasser mit 44 g Calciumchlorid (0,4 mol, 800 % Überschuß) 3 h auf 90-95 °C erwärmt. Danach wurde das Pigment abfiltriert, mit destilliertem Wasser gewaschen, wiederum unter Zusatz einer Lösung von 2,7 g Octadecylamin in Essigsäure (0,01 mol) 3 h bei 95 °C verrührt, abfiltriert, mit destilliertem Wasser gewaschen und getrocknet. Das entstandene Pulver wurde 1 min lang in einer Splittermühle gemahlen und ohne weitere Behandlung in Polypropylen bei der Verspinnung appliziert. Die Druckerhöhung betrug 250 MPa/kg. Das Calciumsalz, bei dem kein abschließender Ersatz eines Teils des Calciums durch Octadecylammonium durchgeführt wurde, zeigte eine Druckerhöhung von etwa 800 MPa/kg. In einem Einbrennlack und in PVC zeigten beide Pulver dieselbe Ergiebigkeit und Farbnuance.

**Beispiel 3**

In einem Becherglas wurden über Nacht 48,8 g 3,4-Dichloranilin-6-sulfonsäure in 800 ml Wasser unter Zusatz von 16 g Calciumhydroxid und 1,6 g Aktivkohle verrührt. Am nächsten Tag wurden 80 ml einer Natriumnitrit-Titrierlösung einer Konzentration von 2,5 mol/l zugegeben; nach Erwärmen auf 50 °C wurde die Lösung filtriert. Das klare Filtrat wurde unter Rühren in 50 ml einer Chlorwasserstoffsäure-Titrierlösung einer Konzentration von 8 mol/l zugegeben. Es wurde 3 h gerührt. Inzwischen wurden 50 g 3'-Sulfophenylmethylpyrazolon in 800 ml Wasser durch Verrühren mit 40 g Calciumhydroxid gelöst, worauf die Lösung filtriert wurde. Zu dem klaren Filtrat wurde die Suspension der diazotierten aktiven Komponente zugegeben; nach Zusammengießen wurde zu dem Pigment in einem saueren Medium 1 g eines Amingemisches zugegeben (Alkylamine mit 12 bis 18 Kohlenstoffatomen in der Kette ($C_{12}$ bis $C_{18}$), d.h. etwa 0,004 mol. Die Suspension wurde 3 h auf 90 bis 95 °C erwärmt; hiernach wurde das Pigment abfiltriert, mit Wasser gewaschen und getrocknet. Ausbeute 105 g eines weichen gelben Pulvers ($R_1$ = $R_2$ = Cl; x = 1,98; y = 0,02; n = 12 bis 18 (vgl. Versuch Nr. 23 der Tabelle)).

Das Pigment wurde in verschiedenen Medien appliziert. In einem Alkydlack und in PVC war es ausgiebiger als ein in analoger Weise, jedoch ohne Zusatz der Alkylamine hergestelltes Pigment. Bei der Verspinnung in POP (PP) betrug die Druckerhöhung 60 bis 150 MPa gegenüber dem Pigment ohne Zusatz der Alkylamine, wo die Druckerhöhung 600 MPa/kg betrug (vgl. Versuch Nr. 18 der Tabelle).

**Beispiel 4**

In einem Becherglas wurden in 200 ml Wasser 9,2 g 4-Acetylaminoanilin-2-sulfonsäure (0,04 mol) unter Zusatz von 4 ml einer Natriumhydroxid-Titrierlösung einer Konzentration von 10 mol/l zur Lösung gebracht; nach Verrühren mit 0,5 g Aktivkohle wurde die Lösung filtriert, mit 36 ml einer Chlorwasserstoffsäure-Titrierlösung einer Konzentration von 5 mol/l angesäuert und bei einer Temperatur bis 25 °C mit 16 ml einer Natriumnitrit-Titrierlösung einer Konzentration von 2,5 mol/l diazotiert. Nach Bildung einer Suspension der Diazoverbindung durch Rühren wurden 10,4 g 3'-Sulfophenylmethylpyrazolon und ferner 10,7 g Octadecylamin (0,04 mol) zugegeben. Das Reaktionsgemisch wurde langsam durch Eintragen von Calciumhydroxid bis zu einem pH-Wert von 4 bis 5 alkalisch gemacht. Nach Filtrieren, Waschen und Trocknen wurden 25,9 g eines gelben Pigments erhalten ($R_1$ = $CH_3CONH$; $R_2$ = H; x = y = 1; n = 18 (vgl. Versuch Nr. 20 der Tabelle)).

**Beispiel 5**

In einem Becherglas wurden unter Rühren in 200 ml Wasser 9,2 g (0,04 mol) 3-Acetylaminoanilin-6-sulfonsäure nach Zugabe von 3 ml einer 25-%igen Ammoniumhydroxidlösung zur Lösung gebracht. Nach Verrühren mit 0,5 g Aktivkohle wurde filtriert; das klare Filtrat wurde mit 36 ml einer Chlorwasserstoffsäure-Titrierlösung einer Konzentration von 5 mol/l angesäuert. Dann wurde die Suspension bei einer Temperatur bis 15 °C mit 16 ml einer Natriumnitrit-Titrierlösung einer Konzentration von 2,5 mol/l diazotiert. Nach Rühren der Suspension der Diazoverbindung und Beseitigung der überschüssigen $NO_2^-$-Ionen durch Zusatz von einigen Milligramm Amidosulfonsäure wurden 10,2 g 3'-Sulfophenylmethylpyrazolon und 5,4 g Octadecylamin zugegeben. Die Lösung wurde langsam mit einer Ammoniumhydroxidlösung auf pH 4 bis 5

neutralisiert. Nach Filtrieren, Waschen mit warmem Wasser und Trocknen wurden 22 g eines pulverigen, gelben Pigments erhalten ($R_1$ = H; $R_2$ = $CH_3CONH$; x = 1,5; y = 0,5; n = 18 (vgl. Versuch Nr. 19 der Tabelle)).

**Beispiel 6**

In 700 ml Wasser wurden 30,0 g 4-Methylanilin-2-sulfonsäure (0,16 mol) unter Rühren unter Zusatz von 9 g Calciumhydroxid und 1 g Aktivkohle zur Lösung gebracht. Dann wurde filtriert. Das klare Filtrat wurde mit 64 ml einer Natriumnitrit-Titrierlösung einer Konzentration von 2,5 mol/l versetzt. Die vereinigten Lösungen wurden in 64 ml einer Chlorwasserstoffsäure-Titrierlösung einer Konzentration von 5 mol/l zugetropft. Nach Rühren wurde die erhaltene Suspension der Diazoverbindung in eine filtrierte Lösung der Kupplungskomponente eingetropft, die durch Rühren von 40 g 3'-Sulfophenylmethylpyrazolon mit 20 g Calciumhydroxid in 350 ml Wasser hergestellt worden war. Der pH-Wert des Reaktionsgemisches wurde auf 4 bis 5 eingestellt; dann wurde eine Lösung von 1,2 g Octadecylamin in Essigsäure zugegeben. Die Farbstoffsuspension wurde 2 h lang auf 80 °C erwärmt und dann filtriert. Der Filterkuchen wurde mit warmem entsalztem Wasser gewaschen und getrocknet. Es wurden 81 g eines gelben, pulverigen Pigments mit einer weichen Textur erhalten ($R_1$ = $CH_3$; $R_2$ = H; x = 1,97; y = 0,03; n = 18 (vgl. Versuch Nr. 21 der Tabelle)).

In der nachstehenden Tabelle sind weitere Versuche aufgeführt, die sich auf Herstellung und Eigenschaften erfindungsgemäßer Azopigmente beziehen.

| Versuch Nr. | Diazokomponente (substit. Anilin) (a) | Kupplungskomponente (substit. Pyrazolon) (b) | Hauptkation | Löslichkeit (c) (mg/l) | Druckerhöhung bei Extrusion (d) (MPa/kg) | Dissoziationskonstante (e) | Ergiebigkeit eines Anstrichs (f) |
|---|---|---|---|---|---|---|---|
| 1 | 2-Cl-5-S | 4-S | $Na^+$ | 2,5-2,8.$10^4$ | | | 800/100 |
| 2 | 2,5-diCl-4-S | • | • | 2,0-2,8.$10^4$ | 2000-3000 | | 700/100 |
| 3 | 3,4-diCl-6-S | • | • | 2,0-2,2.$10^4$ | | | 600/100 |
| 4 | -"- | 2-Cl-5-S | $Ca^{+2}$ | 0,4-1,9.$10^4$ | | 8,3.$10^{-8}$ | 700/100 |
| 5 | 2-Cl-5-S | 4-S | • | 7,0-7,5.$10^3$ | | 4,1.$10^{-9}$ | 800/100 |
| 6 | 2,5-diCl-4-S | • | • | 1,0-5,5.$10^3$ | 2000-2500 | | 750/100 |
| 7 | 3,4-diCl-6-S | • | • | 1,0-3,5.$10^3$ | 2000-2500 | | 450/100 |
| 8 | 2,5-diCl-4-S | 3-S | • | 1,5-2,3.$10^3$ | 2000-3000 | | 700/100 |
| 9 | 2-Cl-5-S | • | • | 0,6-1,5.$10^3$ | | | 800/100 |
| 10 | 3-$CH_3$CONH-6-S | • | • | 0,2-1,1.$10^3$ | | | 700/100 |
| 11 | 2-$CH_3$-4-S | • | • | 1,8-6,6.$10^2$ | | | 300/100 |
| 12 | 4-$CH_3$CONH-3-S | • | • | 1,2-1,8.$10^2$ | | | 220/100 |
| 13 | 4-$CH_3$-3-S | • | • | 70-90 | | | 500/100 |
| 14 | 4-$CH_3$CONH-2-S | • | • | 40-70 | | 1,7.$10^{-9}$ | 150/100 |
| 15 | 4-$CH_3$-2-S | • | • | 30-60 | | | 120/100 |
| 16 | 3,4-diCl-6-S | • | $H^+$ | 22-28 | 1500-2500 | 1,3.$10^{-9}$ | 100/100 |
| 17 | 3,4-diCl-6-S | • | $NH_4^+$ | 38 | | 1,2.$10^{-9}$ | 100/100 |
| 18 | 3,4-diCl-6-S | • | $Ca^{+2}$ | 26 | 300-1500 | 1,2.$10^{-9}$ | 100/100 |
| 19 | 3-$CH_3$CONH-6-S | • | $Ca^{+2}$,$RNH_3^+$ | | 300- 800 | | 130/100 |
| 20 | 4-$CH_3$CONH-2-S | • | • | | 300- 600 | | 120/100 |
| 21 | 4-$CH_3$-2-S | • | • | | 300- 600 | | 100/100 |
| 22 | 3,4-diCl-6-S | • | $RNH_3^+$ | 3-5 | 200- 300 | 4,7.$10^{-10}$ | 80/100 |
| 23 | 3,4-diCl-6-S | • | $Ca^{+2}$,$RNH_3^+$ | 10-30 | 60- 250 | 9,3.$10^{-10}$ | 95/100 |

(a) angegeben sind die Substituenten des Anilins; S = Sulfonsäure

(b) angegeben sind die Substituenten des Phenylrings des 3-Methyl-1-phenylpyrazolons; S = Sulfonsäure

(c) spektrophotometrisch bestimmte Löslichkeit der Pigmente in wässerigen Pufferlösungen bei pH 4 bis 7

(d) charakteristische Druckerhöhung beim Extrudieren von mit dem entsprechenden Pigment gefärbten Polypropylenfasern, bezogen auf 1 kg des Pigments

(e) Dissoziationskonstante der Farbstoff-Enolgruppe, spektrophotometrisch aus den Farbänderungen bei pH-Änderungen bestimmt

(f) Ergiebigkeit des Farbstoffs in einem Anstrichmittel, angegeben als Masseteile des entsprechenden Pigments, die erforderlich sind, damit die Färbung die gleiche Farbtiefe hat wie eine Vergleichsfärbung, die mit 100 Masseteilen des Farbstoffs Nr. 18 der Tabelle (Paliotolgelb K 2270 der Firma BASF) hergestellt wurde.

### Patentansprüche

1. Azopigmente der allgemeinen Formel I,

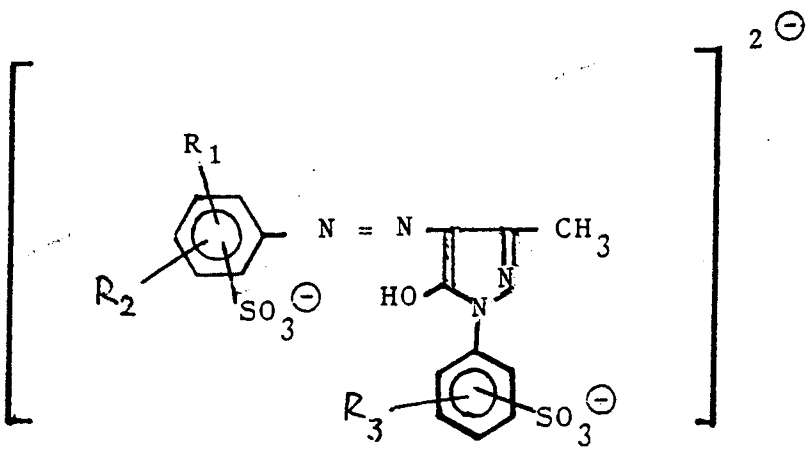

$(Me^{\oplus})_x$, $(C_nH_{2n+1}NH_3^{\oplus})_y$ (I),

in der bedeuten:

| | |
|---|---|
| $R_1$, $R_2$ und $R_3$ | zugleich oder unabhängig Wasserstoff, Methyl, Chlor oder Acetylamino, |
| $Me^{\oplus}$ | Wasserstoff ($H^+$), Natrium ($Na^+$), Calcium ($Ca^{2+}/2$), Ammonium ($NH_4^+$) oder Gemische dieser Ionen, |
| n | 12, 14 und/oder 18, |
| x | eine Zahl von 0 bis 1,98 und |
| y | eine Zahl von 0,02 bis 2,0, |

wobei x + y = 2 ist.

2. Azopigmente nach Anspruch 1 der allgemeinen Formel Ia

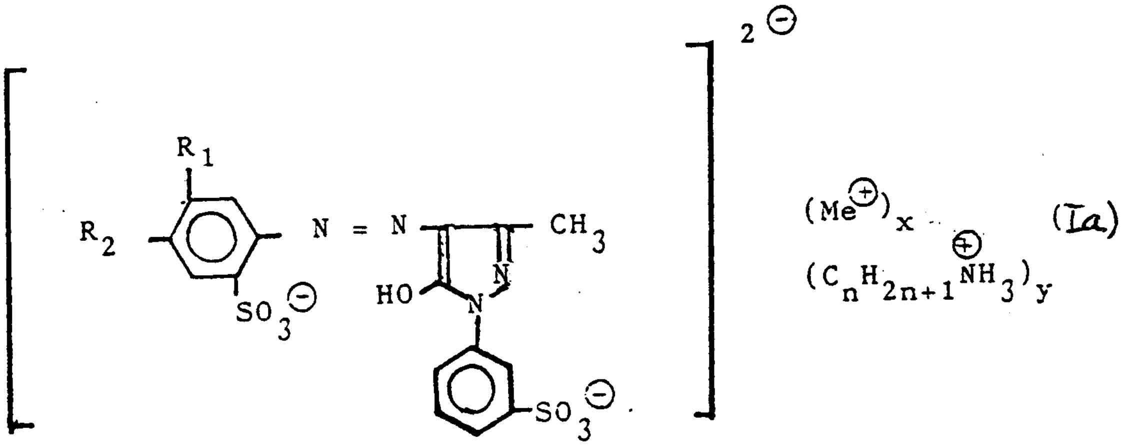

(Ia).

mit $R_1$, $R_2$, Me, n, x und y wie im Anspruch 1.

3. Azopigmente der Formel I nach Anspruch 1 und der Formel Ia nach Anspruch 2 mit $x = 0$ und $y = 2$.

4. Verfahren zur Herstellung der Azopigmente der Formeln I und Ia nach den Ansprüchen 1 bis 3, gekennzeichnet durch folgende Schritte:

(A) Diazotierung einer Anilinsulfonsäure der Formel II

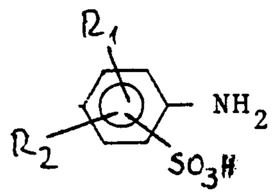

(II)

mit $R_1$ und $R_2$ wie im Anspruch 1

zum entsprechenden Diazoniumsalz der Formel IIa,

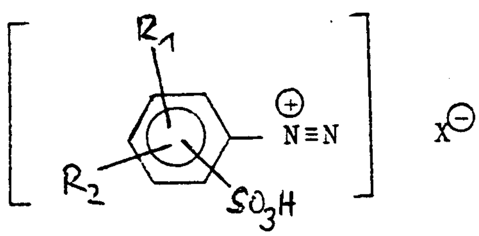

(IIa),

wobei $X^-$ ein Anion, insbesondere $Cl^-$, bedeutet,

(B) Kupplung des Diazoniumsalzes der Formel IIa mit einem 3-Methyl-1-sulfophenylpyrazolon der Formel III

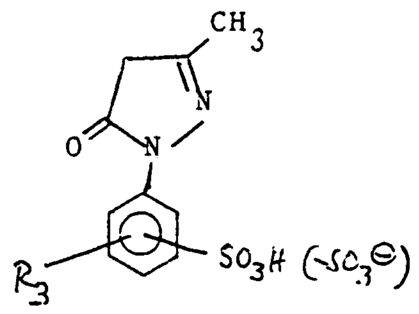

(III)

mit $R_3$ wie im Anspruch 1,

gegebenenfalls mit Überführung des Kupplungsprodukts in die Form der freien Säure der Formel IV

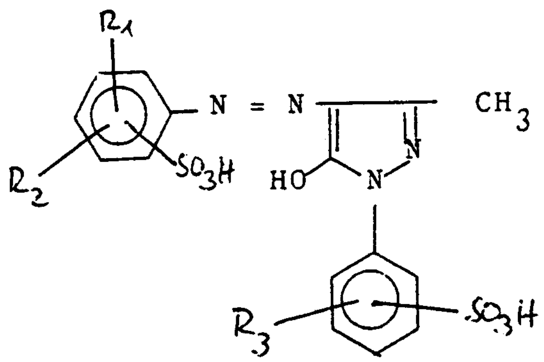

(IV),

mit $R_1$, $R_2$ und $R_3$ wie oben,

und

(C) Umsetzung des Kupplungsprodukts, gegebenenfalls in Form der freien Säure der Formel IV, oder eines Natrium-, Calcium- und/oder Ammoniumsalzes davon mit einem oder mehreren Aminen der Formel V

$C_nH_{2n+1}NH_2$ (V)

mit n wie im Anspruch 1

und gegebenenfalls einem Natrium-, Calcium- und/oder Ammoniumsalz bzw. einem entsprechenden Hydroxid.

**5.** Verfahren nach Anspruch 4, dadurch gekennzeichnet, daß Schritt C zusammen mit der Kupplung von Schritt B vorgenommen wird.

**6.** Verwendung der Azopigmente nach den Ansprüchen 1 bis 3 zum Färben von Kunststoffen, insbesondere nichtpolaren oder wenig polaren Kunststoffen, wie Polyethylen, Polypropylen und anderen Polyolefinen, von Polyvinylchlorid, Polystyrol und Polyestern sowie zum Färben von Kunststoffdispersionen und Anstrichmitteln, insbesondere Alkydharzen.

**7.** Gefärbte Kunststoffe, insbesondere Polyolefine, wie Polyethylen, Polypropylen, Polyvinylchlorid und Polystyrol, Polyester sowie Kunststoffdispersionen und Anstrichmittel, insbesondere Alkydharze, gekennzeichnet durch mindestens ein Azopigment nach einem der Ansprüche 1 bis 3.

**Claims**

1. Azo pigments of the general formula I,

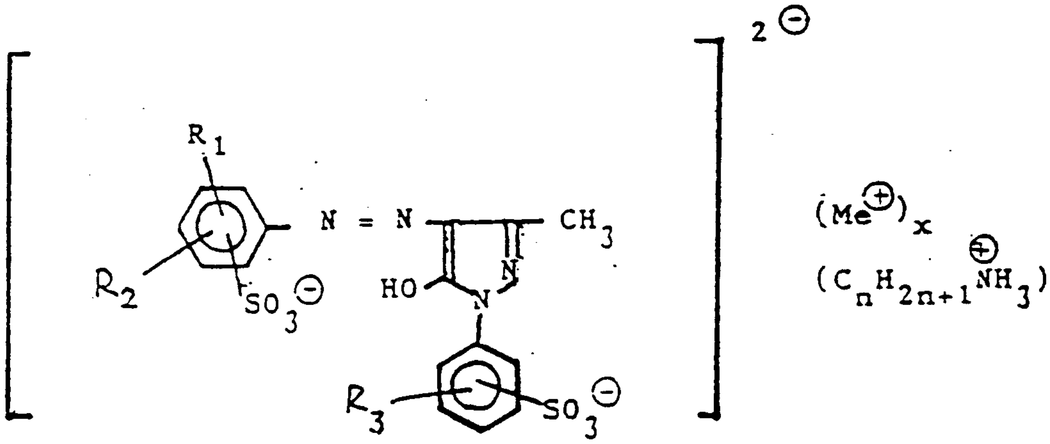

(I),

in which
$R_1$, $R_2$ and $R_3$, all at the same time or independently, represent hydrogen, methyl, chlorine or acetylamino,
$Me^+$ represents hydrogen ($H^+$), sodium ($Na^+$), calcium ($Ca^{2+}/2$), ammonium ($NH_4^+$) or mixtures of these ions,
n is 12, 14 and or 18,
x is a number from 0 to 1.98 and
y is a number from 0.02 to 2.0,
wherein $x + y = 2$.

2. Azo pigments according to Claim 1 of the general formula Ia

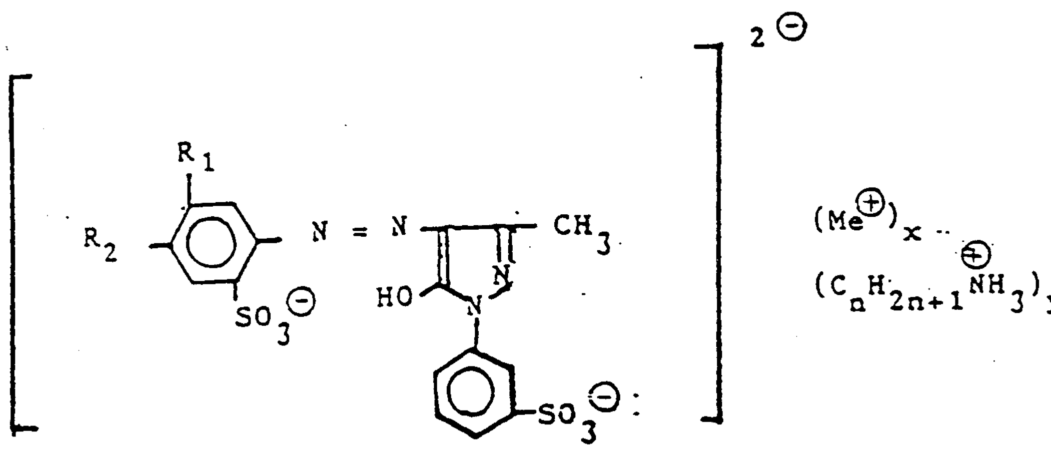

(Ia).

where $R_1$, $R_2$, Me, n, x and y are defined as in Claim 1.

3. Azo pigments of the formula I according to Claim 1 and of the formula Ia according to Claim 2, where $x = 0$ and $y = 2$.

4. A process for preparing azo pigments of the formula I and Ia according to Claims 1 to 3, characterized by the following steps:

(A) diazotisation of an anilinesulphonic acid of the formula II

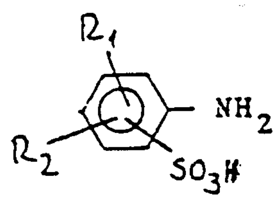

(II)

where $R_1$ and $R_2$ are defined as in Claim 1,
to give the corresponding diazonium salt of the formula IIa,

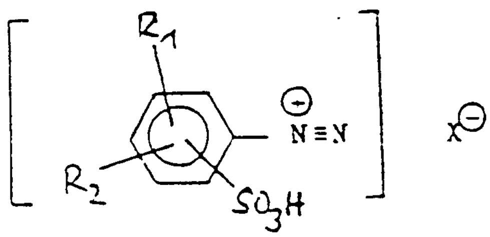

(IIa),

wherein $X^-$ represents an anion, in particular $Cl^-$,
(B) coupling of the diazonium salt of the formula IIa with a 3-methyl-1-sulphophenylpyrazolone of the formula III

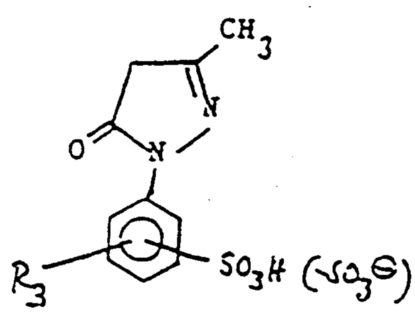

(III)

where $R_3$ is defined as in Claim 1,
optionally with conversion of the coupling product into the form of the free acid of the formula IV

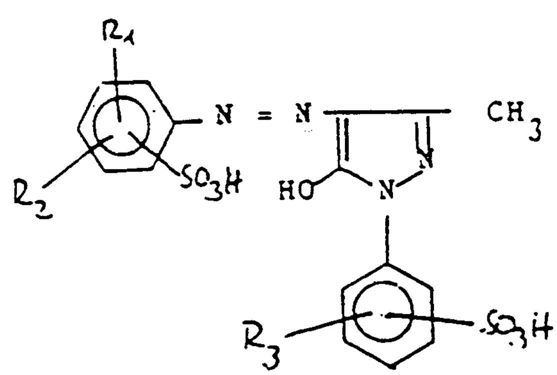

(IV),

where $R_1$, $R_2$ and $R_3$ are defined as above,

and

(C) reaction of the coupling product, optionally in the form of the free acid of the formula IV, or a sodium, calcium and/or ammonium salt thereof, with one or more amines of the formula V

$C_nH_{2n+1}NH_2$ (V)

where n is defined as in Claim 1

and optionally a sodium, calcium and/or ammonium salt or a corresponding hydroxide.

**5.** A process according to Claim 4, characterized in that step C is performed together with the coupling reaction in step B.

**6.** Use of the azo pigments according to Claims 1 to 3 to colour plastics, in particular non-polar or slightly polar plastics, such as polyethylene, polypropylene and other polyolefins, polyvinylchloride, polystyrene and polyesters and to colour plastic dispersions and coating materials, in particular alkyd resins.

**7.** Coloured plastics, in particular polyolefins such as polyethylene, polypropylene, polyvinylchloride and polystyrene, polyesters and plastic dispersions and coating materials, in particular alkyd resins, characterized by at least one azo pigment according to one of Claims 1 to 3.

## Revendications

**1.** Pigments azoïques de formule générale I :

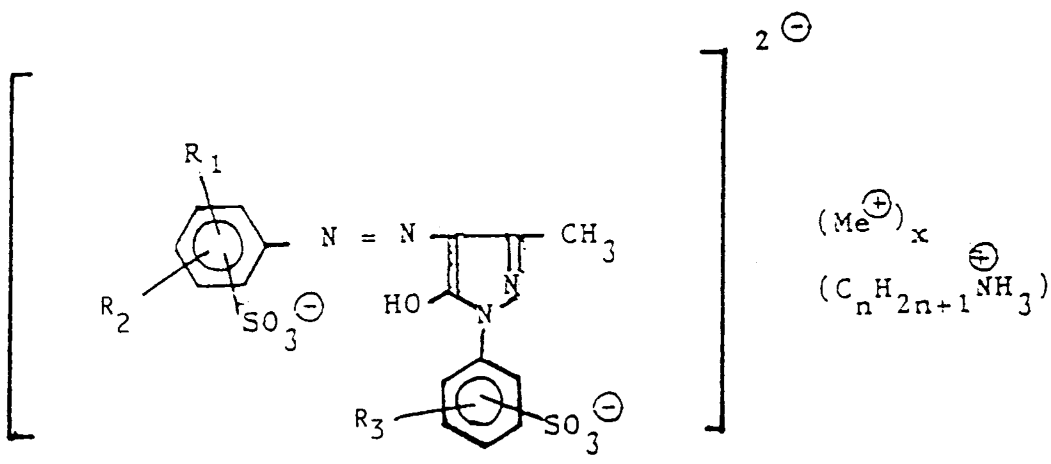

(I),

dans laquelle :

$R_1$, $R_2$ et $R_3$ représentent en même temps ou indépendamment un hydrogène, un méthyle, un chlore ou un acétylamino,

$Me^+$ représente un hydrogène ($H^+$), un sodium ($Na^+$), un calcium ($Ca^{2+}/2$), un ammonium ($NH_4^+$) ou des mélanges de ces ions,

n représente 12, 14 et/ou 18,

x représente un nombre de 0 à 1,98

et

y représente un nombre de 0,02 à 2,0

avec x + y = 2.

2. Pigments azoïques selon la revendication 1 de formule générale Ia :

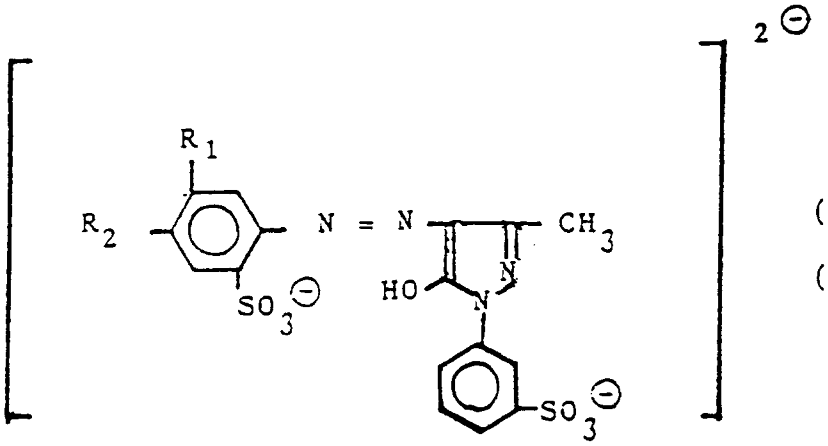

$(Me^{\oplus})_x$ $(C_nH_{2n+1}NH_3^{\oplus})_y$

(Ia)

avec $R_1$, $R_2$, Me, n, x et y comme à la revendication 1.

3. Pigments azoïques de formule I selon la revendication 1 et de formule Ia selon la revendication 2 avec x = 0 et y = 2.

4. Procédé de préparation de pigments azoïques de formules I et Ia selon les revendications 1 à 3, caractérisé par les étapes suivantes :

(A) dizoter un acide anilinesulfonique de formule II :

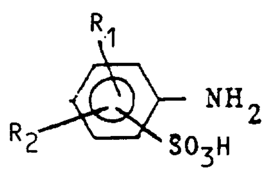

(II)

avec $R_1$ et $R_2$ comme c'est indiqué à la revendication 1,
pour donner le sel correspondant de diazonium de formule IIa :

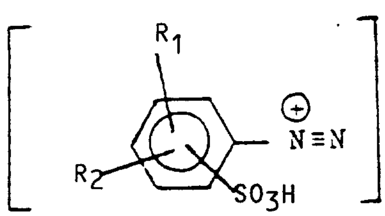

$X^{\ominus}$

(IIa),

dans laquelle $X^-$ représente un anion, notamment $Cl^-$,

(B) copuler le sel de diazonium de formule IIa avec une 3-méthyl-1-sulfophénylpyrazolone de formule III :

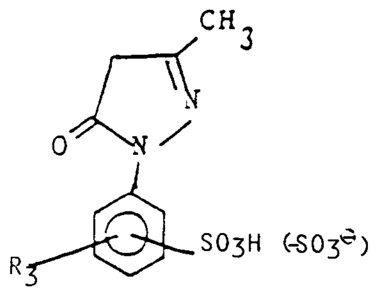

(III)

$R_3$ ayant la signification donnée à la revendication 1, le cas échéant en transformant le produit de copulation en acide libre de formule IV :

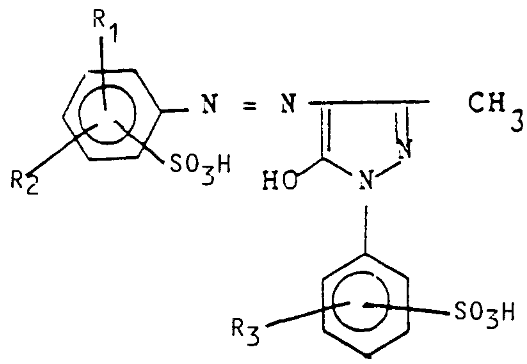

(IV),

$R_1$, $R_2$ et $R_3$ ayant les significations données ci-dessus,
et
(C) faire réagir le produit de copulation, le cas échéant sous la forme de l'acide libre de formule IV, ou d'un de ses sels de sodium, de calcium et/ou d'ammonium avec
une ou plusieurs amines de formule V :

$C_nH_{2n+1}NH_2$ (V)

n ayant la signification donnée à la revendication 1.
et le cas échéant avec un sel de sodium, un sel de calcium et/ou un sel d'ammonium ou un hydroxyde correspondant.

5. Procédé selon la revendication 4, caractérisé en ce qu'on réalise l'étape C en même temps que la copulation de l'étape B.

6. Utilisation des pigments azoïques selon les revendications 1 à 3 pour colorer des matières plastiques notamment des matières plastiques non polaires ou peu polaires, comme le polyéthylène, le polypropylène et d'autres polyoléfines, du poly(chlorure de vinyle), du polystyrène et des polyesters ainsi que pour colorer des dispersions de matières plastiques et des peintures, notamment des résines alkydes.

7. Matières plastiques colorées, notamment des polyoléfines, comme le polyéthylène, le polypropylène, le poly(chlorure de vinyle) et le polystyrène, des polyesters ainsi que des dispersions de matières plastiques et des peintures, notamment des résines alkydes, caractérisées par au moins un pigment azoïque selon l'une des revendications 1 à 3.